# EUROPÄISCHE PATENTANMELDUNG

(11) **EP 4 254 174 A1**
(43) Veröffentlichungstag der Anmeldung: **04.10.2023**
(21) Anmeldenummer: 22165573.1
(22) Anmeldetag: 30.03.2022
(51) Int. Cl.: G06F 8/71, G06F 8/61, G06F 9/455

(54) **VERFAHREN ZUM ERZEUGEN VON SOFTWARECONTAINERN IN EINEM BUILD-PROZESS**

(71) Anmelder: Siemens Aktiengesellschaft, 80333 München (DE)
(72) Erfinder: FRIES, Steffen, 85598 Baldham (DE); KNIERIM, Christian, 81373 München (DE)
(74) Vertreter: Siemens Patent Attorneys

(57) **Zusammenfassung**

Ein Verfahren zum Erzeugen von Softwarecontainern in einem Build-Prozess, umfasst die Schritte: Bereitstellen (S1) eines ersten Softwarecontainerbildes (3, 5) für einen ersten Softwarecontainer, wobei das erste Softwarecontainerbild (3, 5) zumindest Containerkomponenten für eine Laufzeitschicht und eine Anwendungsschicht umfasst; zum Erzeugen eines zweiten Softwarecontainerbildes (9), Kopieren (S2) von mindestens einer Containerkomponente des ersten Softwarecontainerbildes (3, 5) in das zweite Softwarecontainerbild (9); Erfassen (S3) von der kopierten Containerkomponente zugeordnete Komponenten-Eigenschaften (4, 6); und Speichern (S4) der Komponenten-Eigenschaften (4, 6) in einer dem jeweiligen Softwarecontainerbild (9) zugeordneten Assetliste (8) außerhalb der Softwarecontainerbilder (3, 5, 9).

Das Verfahren ermöglicht eine zuverlässige und aufwandsgünstige Schwachstellenerkennung aufgrund der erzeugten Assetlisten. Die Assetliste kann kryptographisch gesichert sein und beim Kopieren von Softwarecontainer-Komponenten ergänzt werden.

## Beschreibung

Die vorliegende Erfindung betrifft ein Verfahren zum Erzeugen von Softwarecontainern, beispielsweise für ein computergesteuertes industrielles Automatisierungssystem. Die Erfindung eignet sich insbesondere im Rahmen einer Continuous Integration/Continuous Delivery (CI/CD) Pipeline.

Bei einem Erstellungsprozess oder Build-Prozess wird in der Softwareentwicklung ein Vorgang zur weitestgehend automatisierten Erzeugen von Anwendungsprogrammen, beispielsweise für verteilte Automatisierungsnetzwerke, verstanden.

In einem Automatisierungsprozess für Entwickler im Rahmen einer Continuous Integration (CI) werden regelmäßig neue Code-änderungen für Apps bzw. Anwendungsprogramme entwickelt, geprüft und in einem gemeinsamen Repository zusammengeführt. Eine CI/CD-Pipeline umfasst dabei mehrere Phasen, die zur Bereitstellung einer neuen Softwareversion durchlaufen werden und oft den Einsatz von Softwarecontainern und deren Containerbilder bzw. Container-Images verlangen. Viele Container-Images werden im Rahmen des Build-Prozesses aus anderen Container-Images generiert, wobei die Integrität der benutzen Images geprüft werden muss.

In der Build-Phase wird die Anwendung kompiliert, und in der Test-Phase wird der gewonnene Code getestet. Beim Release wird die Anwendung zunächst ins Repository gestellt, und in der Bereitstellungs-Phase wird der Code in der Produktionsumgebung bereitgestellt. Anschließend können Validierungschritte und Complianceprüfungen des Builds vorgenommen werden. Dabei kommen Scanning Tools für die Image-Sicherheit zum Einsatz, um bekannte Schwachstellen (CVEs) aufzudecken.

Ein Container-Image enthält verschiedene Komponenten in der Art von Binärdateien, Erweiterungen für Programmiersprachen oder sonstigen Modulen, die üblicherweise mit Hilfe eines Paketmanagers installiert werden. Für unterschiedliche Aufgaben, z.B. für die Installation von Betriebssystempaketen oder von Modulen für Programmiersprachen, ist es auch üblich, dass innerhalb eines Images nicht nur ein Paketmanager verwendet wird, sondern sich mehrere Paketmanager je nach Art der Aufgabe unterscheiden. Beispielsweise werden Basis-Pakete mit Hilfe des Debian-Paketmanagers installiert, Erweiterungen für die Programmiersprache python mittels pip oder node-Pakete mit Hilfe von Yarn. Die Aufgabe dieser Paketmanager besteht darin, die einzelnen Dateien eines Paketes zu verwalten. Die relevanten Informationen werden im Container-Image innerhalb einer für den jeweiligen Paketmanager hinterlegten Paketdatenbank verwaltet.

Bei Paketmanagern, wie dem Debian-Paketmanager, ist es möglich, dass die Integrität der installierten Pakete durch Verwendung des Paketmanagers innerhalb des Images überprüft werden kann. Für jede vom Paketmanager verwaltete Datei werden hierfür lokal Checksummen in der Paketdatenbank abgelegt. Zudem kann eingestellt werden, dass alle vom jeweiligen Paketmanager verwaltete Objekte signiert sein sollen und nur signierte Pakete auf dem System installiert werden können.

Bei anderen Paketmanagern kann weder die Integritätsüberprüfung der einzelnen Dateien noch die Signaturüberprüfung mit Hilfe einer Datenbank vorausgesetzt werden. Ein Paketmanager erfasst in seiner Paketdatenbank jedoch praktisch immer, Informationen darüber, welche Dateien von dem Paket bereitgestellt werden und von ihm installiert werden. Des Weiteren bieten Paketmanager auch die Möglichkeit, zwischen Paketen eine Abhängigkeitserkennung durchzuführen, sodass bei der Installationsanfrage an ein Paket mehrere Pakete nachinstalliert werden können.

Um Schwachstellen für ein genutztes Container-Image zu ermitteln, gibt es im Wesentlichen zwei Ansätze, die in einem Container-Image bereitgestellte Containerkomponenten identifizieren und mit einer Schwachstellendatenbank abgleichen. Zum einen kann ein signaturbasierter Ansatz verfolgt werden, bei dem für jede Datei eine Signatur erfasst und einer Containerkomponente zugeordnet wird. Sind für die Komponente Schwachstellen bekannt, wird die Schwachstelle dem Container-Image zugeordnet, indem der Scanner im Container-Image die jeweilige Signatur findet.

Ein anderer Ansatz nutzt die Funktionen des Paketmanagers. Die Schwachstelleninformationen werden dann durch Abfrage des jeweiligen Paketmanagers ermittelt, und es wird eine Liste der installierten Komponenten erstellt. Dabei wird angenommen, dass der Paketmanager vertrauenswürdig ist.

Bei dem signaturbasierten Ansatz muss für jede relevante Datei eine Signatur erzeugt werden und diese dem Scanner in seiner Schwachstellendatenbank bekannt gemacht werden. Zudem müssen sämtliche Dateien im Container-Image gescannt werden, wodurch das Ermitteln von Schwachstellen ressourcenintensiver ist als bei der Abfrage der Paketdatenbank. Hersteller von Container-Scannern reduzieren daher üblicherweise den Scan-Umfang, indem sie nur nach definierten Dateien suchen und wenige definierte Programmiersprachen beim Scan unterstützen.

Es ist in manchen Fällen wünschenswert, Softwarecontainer schlanker zu gestalten, wie z.B. ohne eine Distributionsschicht mit einem Paketmanager.

Der paketmanagerbasierte Ansatz kann jedoch nicht auf sogenannte Distroless-Images angewandt werden. Distroless-Images sind Container-Images, die keinen Paketmanager und keine Paketdatenbanken aufweisen, wodurch das Image härtbar und größenmäßig optimierbar ist. Man minimiert beispielsweise das Container-Image auf die erforderlichen Containerkomponenten.

Eine Containerkomponente kann hierbei kleiner als ein Paket eines Paketmanagers sein, sodass der Footprint kleiner wird.

Ein iteratives Softwareentwicklungsverfahren kann mehrere Stufen umfassen, wobei in mehreren Schritten Containerkomponenten aus anderen Container-Images in ein neues Container-Image kopiert werden (z.B. Multistage Builds).

Distroless-Images werden beispielsweiserweise über derartige Multistage-Builds innerhalb einer CI/CD-Pipeline minimiert, indem nur die relevanten Daten aus dem vorhergehenden Image herauskopiert werden, welches auch Paketmanager aufweisen kann. Es können auch Daten aus verschiedenen vorherigen Container-Images kopiert werden und in das zu erzeugende Container-Image eingefügt werden.

Schwachstellen solcher Distroless-Images können ausschließlich mit Hilfe von Signaturdatenbanken ermittelt werden.

Es besteht somit der Bedarf ein einer Lösung, die es ermöglicht, einen alternativen und performanteren Ansatz zu wählen, der die Komponentenerkennung durchführen kann, ohne dass hierfür ein signaturbasierter Ansatz erforderlich ist.

Eine Aufgabe der Erfindung besteht nun insbesondere darin, die Erzeugung von neuen Softwarecontainern im Build-Prozess möglichst sicher zu gestalten.

Demgemäß wird ein Verfahren zum Erzeugen von Softwarecontainern in einem Build-Prozess vorgeschlagen, bei dem die Schritte durchgeführt werden:
Bereitstellen eines ersten Softwarecontainerbildes für einen ersten Softwarecontainer, wobei das erste Softwarecontainerbild zumindest Containerkomponenten für eine Laufzeitschicht und eine Anwendungsschicht umfasst;
zum Erzeugen eines zweiten Softwarecontainerbildes, Kopieren von mindestens einer Containerkomponente des ersten Softwarecontainerbildes in das zweite Softwarecontainerbild;
Erfassen von der kopierten Containerkomponente zugeordnete Komponenten-Eigenschaften; und
Speichern der Komponenten-Eigenschaften in einer dem jeweiligen Softwarecontainerbild zugeordneten Assetliste außerhalb der Softwarecontainerbilder.

Das vorgeschlagene Verfahren erlaubt durch die Erzeugung einer Assetliste eine Schwachstellenerkennung bzgl. der Komponenten in Softwarecontainern bzw. deren Softwarecontainerbildern, die keine Paketmanager enthalten, ohne aufwendige Signaturprüfungen. Die Assetliste kann dabei als Datenbank implementiert sein.

Softwarecontainerbilder also Container-Images werden üblicherweise über mehrere Schritte hinweg in einer CI/CD-Pipeline erzeugt. Das vorgeschlagene Verfahren unterstützt solche Multistage-Builds, sodass Inhalte aus den vorhergehenden Container-Images in das aktuelle Container-Image kopiert werden und anschließend weitere Verarbeitungsschritte durchgeführt werden. Man kann sagen, dass das erste Softwarecontainerbild einer ersten Generation und das zweite erzeugte Softwarecontainerbild einer zweiten oder Folgegeneration gehört. Die wiederholte Nutzung von Containerkomponenten und deren Sicherheit kann mit Hilfe des Verfahrens aufwandsgünstig nachvollzogen werden.

Als eine zu kopierende Containerkomponente wird im Sine des Verfahrens insbesondere ein Dateisystemobjekt im Ausgangscontainerbild verstanden.

Vorzugsweise ist die Erstellung und Verwaltung oder Pflege der Assetlisten ein fester Bestandteil des Build-Prozesses, beispielsweise als Softwarekomponente oder Prozess.

Das Verfahren ermöglicht, sobald ein neues Container-Image unter Nutzung von Inhalten aus einem zuvor erstellten Container-Image erzeugt wird, wobei die Inhalte in das neue Container-Image kopiert werden, dass die kopierten Verzeichnisse Paketen des vorherigen Paketes zugeordnet werden und in einer eigenen, außerhalb des Container-Images liegenden Assetliste gespeichert werden. Die Assetliste ist dann für die weitere Build-Pipeline verfügbar.

In Ausführungsformen ist der erste und der zweite Softwarecontainer Teil einer Continuous Integration/Continuous Delivery (CI/CD)-Pipeline.

Das Erfassen der den kopierten Teilen zugeordneten Komponenten-Eigenschaften kann in Ausführungsformen umfassen: Auslesen der Komponenten-Eigenschaften aus der dem ersten Softwarecontainerbild zugeordneten Assetliste.

Eine Assetliste kann initial leer sein und dann über das komplette jeweilige Container-Image erstellt werden.

Vorzugsweise ist wenigstens ein Softwarecontainerbild als Distroless-Image frei von Paketmanagern und Paketdatenbanken. Dadurch kann ein Speicherbedarf reduziert werden, sodass der Software-Footprint verkleinert wird.

In Ausführungsformen umfasst wenigstens ein Softwarecontainerbild einen Paketmanager und eine Paketdatenbank als Containerkomponenten. Der Paketmanager erlaubt, die jeweilige Assetliste für Softwarecontainer, welche auf dem Softwarecontainerbild mit dem Paketmanager aufbauen, einfach zu erstellen und zu aktualisieren. Es ist auch möglich, das mehrere Paketmanager in einem jeweiligen Softwarecontainerbild mit zugehörigen Paketdatenbanken vorliegen.

Paketmanager enthalten eine Paket-Datenbank, die umfassende Informationen über installierte Softwarepakete dokumentiert. Die im Paketmanager vorliegenden Pakete halten alle relevanten Dateninhalte in einer speziell gepackten Funktionsform vor. Dabei werden Datenpakete für Binär-Programmdateien, Daten-Files, Konfigurationsdateien und Metadaten, wie Namen, Autoren, Abhängigkeiten, Funktion und definierte Arbeitsschritte zur Initialisierung eines Pakets, bereitgestellt. Eine Paket-Datenbank stellt in Varianten gewisse Sicherheitsfunktionen bereit, wie Kontrolle der Datei-Prüfsummen als Nachweis für die Gültigkeit der installierten Software, Prüfung der digitalen Signatur als Software-Herkunftsnachweis, Überprüfung des Software-Versionsstands, Verwaltung von Abhängigkeiten, wenn die Funktion von zusätzlicher Software abhängt, oder die Erstellung von Binärpaketen.

In Ausführungsformen weist wenigstens ein jeweiliger Softwarecontainer ein mehrschichtiges Dateisystem auf, und jeder Schicht wird eine eigene Assetliste zugeordnet.

Wird die Assetliste schichtbezogen für die einzelnen Dateisystemschichten erzeugt, kann die Konformität eines Container-Images für jede Schicht überprüft werden, und es können auch nur die unteren Schichten eines Images gestartet und validiert werden.

Das Format der Assetliste kann in verschiedenen Formaten vorliegen, beispielsweise als CSV Datei (comma seperated values), in einem XML- oder JSON-Format. Die Assetliste kann dabei ein eigenständiges Objekt sein oder aber Teil eine schon vorhandenen Metainformation. In einer Metainformation kann die Assetliste als Wert direkt oder als Referenz eingefügt werden.

In Ausführungsformen umfasst das Verfahren den Schritt:
Kryptographisches Verknüpfen des jeweiligen Softwarecontainerbildes mit der dem Softwarecontainerbild zugeordneten Assetliste. Die Sicherheit und Integrität der jeweiligen Assetliste wird dadurch verbessert.

Um die Integrität der Assetliste im Build-Prozess oder auch darüber hinaus zu erhalten, wird sie insofern mit einer kryptographischen Prüfsumme abgesichert. Dabei können verschiedene Verfahren zum Einsatz kommen, wie z.B. asymmetrische Verfahren zur Berechnung einer digitalen Signatur unter Nutzung von Algorithmen wie z.B. RSA, ECDSA, EdDSA. Es können aber auch HMAC-Verfahren genutzt werden, bei der ein symmetrischer Schlüssel für den Integritätsschutz genutzt wird, insbesondere wenn die Assetliste nur in einer administrativen Domäne genutzt wird.

In Ausführungsformen kann der Schritt durchgeführt werden:
Kryptographisches Absichern der jeweiligen Assetliste mit Hilfe einer kryptographischen Prüfsumme.

Ist die jeweilige Assetliste in Kombination mit dem Container-Image mit Hilfe einer Signatur integritätsgesichert, kann eine Validierungskomponente oder eine Validierungsprozess auf der Laufzeitumgebung die Integrität der Assetliste bezüglich der verknüpften Dateien validieren. Die Assetliste kann insbesondere eigenständig oder innerhalb der Metainformationen eines Container-Images der Laufzeitumgebung bereitgestellt werden.

Ein Assetlisteneintrag umfasst in Ausführungsformen den Paketmanager, der die jeweilige Containerkomponente verwaltet, den ursprünglichen Paketnamen und die Version. Weitere Informationen können zusätzlich enthalten sein, insbesondere, wenn die Assetliste als Teil der Metadaten geführt wird. Weitere zusätzliche Daten können in diesem Fall von einer Auswertungskomponente bzw. einem Auswerteprozess geprüft werden. Zusätzlich wird vorzugsweise jedes Dateisystemobjekt in einer verketteten Liste mitsamt Berechtigungen, beispielsweise für Benutzer oder Dateisystemberechtigungen, verwaltet.

In Ausführungsformen umfasst die Assetliste zumindest eine der Komponenten-Eigenschaften: einen Paketmanager zur Verwaltung der Komponente, einen Komponentennamen, eine Version der ermittelten Komponente, einen Fingerprint der Komponente, einen Zeitpunkt der Ermittlung der Komponente, einen Hinweis zu bekannten Schwachstellen zum Zeitpunkt der Ermittlung, insbesondere als Wert oder Referenz, einen Hinweis zu bekannten Patches zum Zeitpunkt der Ermittlung, insbesondere als Wert oder Referenz, einen Integritätscheckwert, insbesondere eine digitale Signatur oder einen Hash-based Message Authentication Code (HMAC).

In Ausführungsformen umfasst das Verfahren zumindest einen der Schritte:
Prüfen, ob die Containerkomponenten des ersten Softwarecontainerbild von einem Paketmanager mit einer Paketdatenbank verwaltet sind, insbesondere als Paketermittlungsprozess oder -komponente; und
Einschreiben oder Referenzieren der die kopierte Containerkomponente betreffenden Informationen der Paketdatenbank in die dem zweiten Softwarecontainerbild zugeordnete Assetliste.

In Ausführungsformen erfolgt bei dem Verfahren:
Prüfen der kopierten Containerkomponente auf Schwachstellen in Abhängigkeit von den in der Assetliste gespeicherten Komponenten-Eigenschaften.

Das Vorhalten der Assetliste vereinfacht die Prüfung auf Schwachstellen und während der Anwendungsentwicklung im Build-Prozess.

In vielen Fällen handelt es sich bei Schwachstellen um fehlerhafte oder fehlende Überprüfungen von Übergabeparametern in Funktionsaufrufen. Diese können von einem Angreifer ausgenutzt werden, indem z.B. speziell präparierte Übergabeparameter an Socketfunktionen oder Funktionsaufrufe im normalen Programmcode durch exponierte Schnittstellen übergeben werden. Eine Schwachstelle kann insofern eine Übergabemöglichkeit von ungeprüften Parametern und/oder einen ungewünschten Funktionsaufruf durch eine Softwarekomponente oder Anwendung sein.

In Ausführungsformen umfasst das Verfahren zumindest einen der Schritte:
Prüfen, ob die dem zweiten Softwarecontainerbild zugeordnete Assetliste einen Paketmanager für die kopierte Containerkomponente aufweist, und
in Abhängigkeit von dem Prüfungsergebnis.
Abbrechen des Build-Prozesses oder
Überschreiben der die kopierte Containerkomponente betreffenden Informationen der Paketdatenbank in die dem zweiten Softwarecontainerbild zugeordneten Assetliste.

In Ausführungsformen werden die Schritte Bereitstellen, Kopieren, Erfassen und Speichern zum Erzeugen eines dritten Softwarecontainerbildes durchgeführt, wobei in den Schritten das zweite Softwarecontainerbild als erstes Softwarecontainerbild betrachtet wird und das dritte Softwarecontainerbild als das zweite Softwarecontainerbild.

Es ist insbesondere möglich, viele Generationen von Softwarecontainerbilder, die jedenfalls teilweise aufeinander aufbauen, zu erzeugen und im Wege der Assetlisten zuverlässig Komponenten-Eigenschaften auf deren Integrität und/oder Schwachstellen zu prüfen.

Der jeweilige Verfahrensschritt oder Prozess kann als Instanz in einer Verarbeitungsumgebung, insbesondere als Softwareservice oder Cloudservice und/oder auch hardwaretechnisch implementiert sein. Bei einer softwaretechnischen Implementierung kann die jeweilige Funktion, beispielsweise eine Container-Build-Komponente, die Auswertungskomponente oder die Paketermittlungskomponente als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein Ablaufdiagramm mit Verfahrensschritten für eine erste Ausführungsform eines Verfahrens zum Erzeugen von Softwarecontainerbilder;
Fig. 2 zeigt ein Blockdiagramm für Soft- und Hardwarekomponenten und Prozesse, die gemäß einer zweiten Ausführungsform eines Verfahrens zum Erzeugen von Softwarecontainer in einem Build-Prozess verwendet werden; und
Fig. 3 zeigt ein Blockdiagramm für Soft- und Hardwarekomponenten und Prozesse, die gemäß eines Teilaspekts von Ausführungsformen eines Verfahrens zum Erzeugen von Softwarecontainern in einem Build-Prozess verwendet werden können.

In den Figuren sind gleiche oder funktionsgleiche Elemente mit denselben Bezugszeichen versehen worden, sofern nichts anderes angegeben ist.

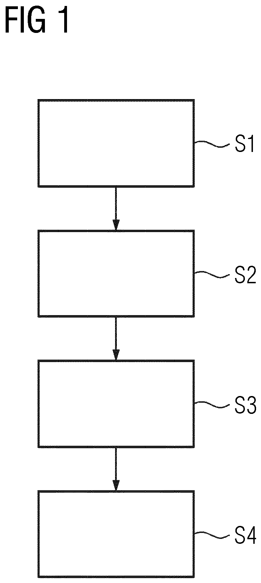

In Fig. 1 sind Verfahrensschritte einer Ausführungsform des Verfahrens zum Erzeugen von Softwarecontainern gezeigt. Beim Build-Prozess für Softwareanwendungen werden immer wieder veränderte Softwarecontainer benutzt, wobei auf bestehende Komponenten in den Softwarecontainerbildern zurückgegriffen wird. Man benutzt einige Containerkomponenten insofern mehrfach in unterschiedlichen Containern zu unterschiedlichen Build- bzw. Entwicklungsstufen.

Daher wird in einem ersten Schritt S1 ein erstes Softwarecontainerbild für einen ersten Softwarecontainer bereitgestellt. Das entsprechende Softwarecontainerbild umfasst Containerkomponenten für eine Laufzeitschicht und eine Anwendungsschicht. Im Weiteren wird auch abgekürzt von einem Containerbild oder Container-Image gesprochen. Das Softwarecontainerbild der ersten Generation enthält Containerkomponenten, die im Entwicklungsprozess in Softwarecontainern von Folgegenerationen benutzt werden können.

Zum Erzeugen eines neuen, zweiten Softwarecontainerbildes einer zweiten Genration wird mindestens eine Containerkomponente des ersten Softwarecontainerbildes in das zweite, neu erstellte Softwarecontainerbild kopiert (Schritt S2).

Damit Informationen über die Komponenten-Eigenschaften des ersten Softwarecontainerbildes für das zweite Softwarecontainerbild nicht verloren gehen, werden die Komponenten-Eigenschaften der in das zweite Softwarecontainerbild kopierten Komponenten im Schritt S3 erfasst und dokumentiert.

Die der kopierten Containerkomponente zugeordnete Komponenten-Eigenschaften werden in einer Assetliste abgespeichert. Das Speichern S4 der Komponenten-Eigenschaften erfolgt außerhalb der beiden Softwarecontainerbilder, damit die Eigenschaften, insbesondere im Hinblick auf Schwachstellen der Containerkomponenten, leicht zugreifbar bleiben und bei weiteren Softwarecontainerbilderzeugungen berücksichtigt werden können.

Man erhält so für jeden bei dem Build-Prozess benutzten Softwarecontainer eine Assetliste, die beispielsweise mit Hilfe von Schwachstellenscannern ausgewertet werden kann. Dadurch kann gerade bei der Verwendung von Softwarecontainern ohne integrierte Paketdatenbank eine Schwachstellenerkennung auch ohne aufwendige Signaturprüfung erfolgen. Man geht dabei davon aus, dass die in den Build-Prozess integrierten Assetlisterzeugungen sicher und integer sind.

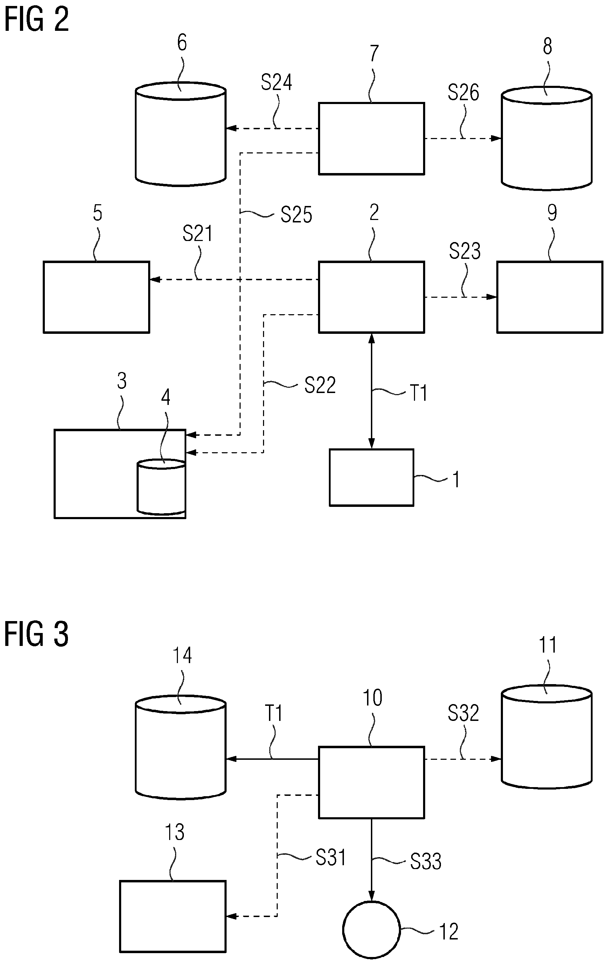

Die Fig. 2 und 3 zeigen über die in Fig. 1 gezeigten Schritte hinausgehende Aspekte bei der Erzeugung von Softwarecontainern bzw. deren Container-Images oder Softwarecontainerbilder.

Fig. 2 zeigt eine Container-Build-Komponente 1, welche im Rahmen eines CI-Pipelineprozesses einen Prozess zum Erstellen eines Softwarecontainers darstellt. Die Build-Komponente 1 nutzt dabei ein Dockerfile 2, was durch den Pfeil T1 angedeutet ist. Das Dockerfile 2 beschreibt die Schritte, welche zur Erzeugung eines Docker-Image als Beispiel für ein Softwarecontainerbild führen. Ausgangspunkt sind zwei Container-Images 3, 5 einer ersten Generation. Das eine Container-Image 3 enthält einen Paketmanager mit einer Paketdatenbank 4, während das andere Container-Image 5 als Distroless-Image implementiert ist. Es hat keine Paketdaten im Image.

Um aus den beiden Container-Images 3, 5, bzw. bestimmter Containerkomponenten daraus, einen neuen Container bzw. ein neues Softwarecontainerbild 9 der zweiten Generation zu erzeugen, wird im Schritt S21, ausgelöst durch die Befehle im Dockerfile 2, das Container-Image 5 als Basisimage für das neue Containerimage kopiert, und aus dem Container-Image 3 wird Binärcode, der in der Paketdatenbank 4 beschrieben ist, im Schritt S22 kopiert. Es entsteht im Schritt S23 das neue Container-Image 9.

Parallel müssen die den kopierten Containerkomponenten zugehörigen Komponenten-Eigenschaften erfasst und festgehalten werden. Dies geschieht durch eine Paketermittlungskomponente 7 der CI-Pipeline, welche im Schritt S25 die entsprechenden Paketinformationen für die kopierte Binärdatei des Container-Images 3 aus der Paketdatenbank 4 abruft. Im Schritt S24 liest die Paketermittlungskomponente 7 aus einer dem Distroless-Container-Image 5 beigeordneten Assetliste 6 die Paketinformationen über das Container-Image 5 aus. Im Schritt S26 wird dann die entsprechende Assetliste 8 für das neu erzeugte Container-Image 9 zusammengestellt. Nun kann auch das Container-Image 9 der zweiten Generation zusammen mit seiner Assetliste 8 weiterverwendet werden.

Es wird dabei angenommen, dass bei der im Schritt S22 kopierten Binärkomponente das Container-Image 3 einen Paketmanager enthält. Wird kein Paketmanager genutzt, müssen die Komponenten manuell verwaltet werden.

Die Paketermittlungskomponente 7 ermittelt, ob die Daten im Container-Image 3 der vorherigen Genration von einem Paketmanager verwaltet wurden und gemäß dem Paketmanager integer sind. Die vom ersten Container-Image 3 in das aktuell erzeugte Container-Image 9 übermittelten Dateien werden dem Paket des ursprünglichen Container-Images 3 durch Abfrage dessen lokaler Paketdatenbank 4 zugeordnet S22 und in die Assetdatenbank bzw. Assetliste 8 des neuen Container-Images 9 eingeschrieben. Hierbei kann zusätzlich noch eine Überprüfung der kopierten Binärkomponente auf bekannte Schwachstellen erfolgen, die dann in der Assetliste ergänzt werden können. Dies ist in Fig. 3 näher erläutert.

Grundsätzlich ist auch das unvollständige Kopieren von Dateisystemobjekten, welche in der vorherigen Version oder Generation von Container-Images von einem Paketmanager verwaltet wurden, zulässig. Beispielsweise können, wie in Fig. 2 angedeutet, auch nur einzelne Binärdaten und keine Include-Dateien in das neue Container-Image 9 kopiert werden. Zudem ist es möglich, dass sich die Dateisystempfade in dem neu erzeugten Container-Image 9 unterscheiden, da die ursprünglichen Daten in ein anderes Zielverzeichnis verschoben werden.

Werden Daten des neuen Container-Images 9 bereits von der Assetliste 8 verwaltet, kann konfiguriert werden, ob die Paketermittlungskomponente 7 ein Überschreiben der Daten zulässt oder aber den Build-Prozess mit einer Fehlermeldung abbricht. Sofern eine Überschreibung eines bereits in der Assetliste 8 erfassten Objektes aus der Konfiguration der Paketermittlungskomponente zugelassen ist, wird in der Assetliste 8 die ursprüngliche Referenz auf ein Paket entfernt und der neu ermittelten Komponente zugeordnet.

Finden in den nachfolgenden Kopierschritten der Imageerstellung für weitere Generationen von Container-Images Berechtigungsänderungen auf den Dateisystemobjekten statt, überprüft die Paketermittlungskomponente 7, ob diese Änderungen referenzierte Pakete betreffen, und korrigiert diese oder bricht den Build-Prozess ab. Das Verhalten der Paketermittlungskomponente 7 ist dabei konfigurierbar.

Es besteht die Möglichkeit, dass der Ersteller eines Container-Images nicht vom Paketmanager verwaltete Dateisystemobjekte, wie z.B. selbst erstellte Compile-Outputs händisch spezifiziert und die Paketermittlungskomponente 7 dann die entsprechenden Referenzen und Dateisystemberechtigungen für die händisch definierten Objekte überprüft und im Erfolgsfall in die Referenzdatenbank der Assetlisten übernimmt.

Fig. 3 erläutert weitere Aspekte bei der Erzeugung von Container-Images, die ergänzend zu den im Hinblick auf Fig. 1 und 2 erläuterten Build-Pipelines berücksichtigt werden können.

Es ist eine Auswertungskomponente 10 gezeigt, welche im Rahmen eines CI-Pipelineprozesses einen Prozess zum Prüfen von Erstellen eines Softwarecontainern 13 darstellt. Die Auswertungskomponente 10 benutzt (T1) die Assetliste 14 des zu prüfenden Softwarecontainers 13. Dazu wird eine Schwachstellendatenbank 11, die beispielsweise bekannte Schwachstellen in Containerkomponenten dokumentiert, verwendet.

Um Schwachstellen zu erkennen, wird Auswertungskomponente 10 betrieben, welche die ermittelten (kopierten) Containerkomponenten unter Rückgriff auf die Assetliste auch ohne die Existenz eines Paketmanagers oder einer Paketdatenbank mit einer Schwachstellendatenbank 11 abgleichen kann.

Zudem ist es möglich, dass die Auswertungskomponente 10 die Integrität der im Container-Image 13 bereitgestellten Daten mit Hilfe der Assetliste 14 überprüft. Dabei kann z.B. die Fingerprintinformation einer Containerkomponente oder eine Signatur eines Komponenteneintrags in der Assetliste 14 genutzt werden.

Im Gegensatz zu konventionellen Container-Signaturverfahren ist es für jede initial von einem Paketmanager bereitgestellte Datei möglich, dass nur deren Integrität und nicht die des gesamten Container-Images überprüft wird. Die Auswertungskomponente 10 ermittelt dediziert, welche Pakete etwa nicht den erforderlichen Integritätsanforderungen entsprechen. Falls dies der Fall ist, gibt die Auswertungskomponente 10 im Schritt S33 eine Warnung an den Nutzer/Entwickler 12 aus oder bricht den Build-Prozess ab.

Wenn die Auswertungskomponente 10 bei einer fehlgeschlagenen Validierung oder einer ermittelten Schwachstelle einen Fehlercode erzeugt, kann die CI/CD-Pipeline auch eines anderen Projektes zum Erzeugen von Container-Images angehalten werden. Alternativ kann z.B. auf einer Laufzeitumgebung auch direkt ein Alarm ausgelöst werden, wie zu Schritt S33 erläutert wurde.

Insgesamt führen die vorgeschlagenen Maßnahmen in der Art der Assetlisten, dass Paketinformationen vorangegangener Imagebuilds im Rahmen des durchgeführten CI-Prozesses nicht mehr verloren gehen, sondern über den Build-Prozess hinweg erhalten bleiben. Dadurch wird eine aufwandsgünstige Prüfung der Integrität von aufeinander aufbauenden Containerkomponenten ermöglicht.

Obwohl die vorliegende Erfindung anhand von Ausführungsbeispielen beschrieben wurde, ist sie vielfältig modifizierbar. Die in der Beschreibungseinleitung erläuterten Eigenschaften von Container-Images bzw. Softwarecontainerbilder, Paketmanagern und Build-Prozessen gelten für die Ausführungsformen der Erfindung gleichermaßen.

## Patentansprüche

1. Verfahren zum Erzeugen von Softwarecontainern in einem Build-Prozess, umfassend:
Bereitstellen (S1) eines ersten Softwarecontainerbildes (3, 5) für einen ersten Softwarecontainer, wobei das erste Softwarecontainerbild (3, 5) zumindest Containerkomponenten für eine Laufzeitschicht und eine Anwendungsschicht umfasst;
zum Erzeugen eines zweiten Softwarecontainerbildes (9), Kopieren (S2) von mindestens einer Containerkomponente des ersten Softwarecontainerbildes (3, 5) in das zweite Softwarecontainerbild (9);
Erfassen (S3) von der kopierten Containerkomponente zugeordnete Komponenten-Eigenschaften (4, 6); und
Speichern (S4) der Komponenten-Eigenschaften (4, 6) in einer dem jeweiligen Softwarecontainerbild (9) zugeordneten Assetliste (8) außerhalb der Softwarecontainerbilder (3, 5, 9) .

2. Verfahren nach Anspruch 1,
**dadurch gekennzeichnet,**
**dass** der erste und der zweite Softwarecontainer (3, 5, 9) Teil einer Continuous Integration/Continuous Delivery (CI/CD)-Pipeline ist.

3. Verfahren nach Anspruch 1 oder 2,
**dadurch gekennzeichnet,**
**dass** das Erfassen der den kopierten Teilen zugeordneten Komponenten-Eigenschaften umfasst: Auslesen (S24) der Komponenten-Eigenschaften aus der dem ersten Softwarecontainerbild (5) zugeordneten Assetliste (6).

4. Verfahren nach einem der Ansprüche 1 - 3, **dadurch gekennzeichnet,**
**dass** wenigstens ein Softwarecontainerbild (5) als Distroless-Image frei von Paketmanagern und Paketdatenbanken ist.

5. Verfahren nach einem der Ansprüche 1 - 4, **dadurch gekennzeichnet,**
**dass** wenigstens ein Softwarecontainerbild (3) mindestens einen Paketmanager und eine zugehörige Paketdatenbank (4) als Containerkomponenten umfasst.

6. Verfahren nach einem der Ansprüche 1 - 5, **dadurch gekennzeichnet,**
**dass** der jeweilige Softwarecontainer (3, 5 ,9) ein mehrschichtiges Dateisystem aufweist, und jeder Schicht eine eigene Assetliste (6, 8) zugeordnet wird.

7. Verfahren nach einem der Ansprüche 1 - 6, ferner umfassend:
Kryptographisches Verknüpfen des jeweiligen Softwarecontainerbildes mit der dem Softwarecontainerbild (5, 9) zugeordneten Assetliste (6, 8).

8. Verfahren nach einem der Ansprüche 1 - 7, ferner umfassend:
Kryptographisches Absichern der jeweiligen Assetliste (6, 8) mit Hilfe einer kryptographischen Prüfsumme.

9. Verfahren nach einem der Ansprüche 1 - 8, **dadurch gekennzeichnet,**
**dass** die Assetliste (5, 8) ein CSV-, XML-, oder JSON-Format hat.

10. Verfahren nach einem der Ansprüche 1 - 9, **dadurch gekennzeichnet,**
**dass** die Assetliste (5, 8) zumindest einer der Komponenten-Eigenschaften: einen Paketmanager zur Verwaltung der Komponente, einen Komponentennamen, eine Version der ermittelten Komponente, einen Fingerprint der Komponente, einen Zeitpunkt der Ermittlung der Komponente, einen Hinweis zu bekannten Schwachstellen zum Zeitpunkt der Ermittlung, insbesondere als Wert oder Referenz, einen Hinweis zu bekannten Patches zum Zeitpunkt der Ermittlung, insbesondere als Wert oder Referenz, einen Integritätscheckwert, insbesondere eine digitale Signatur oder einen Hash-based Message Authentication Code (HMAC).

11. Verfahren nach einem der Ansprüche 1 - 10, ferner umfassend:
Prüfen (S25), ob die Containerkomponenten des ersten Softwarecontainerbild (3) von einem Paketmanager mit einer Paketdatenbank (4) verwaltet sind,
Einschreiben der die kopierte Containerkomponente betreffenden Informationen der Paketdatenbank in die dem zweiten Softwarecontainerbild (9) zugeordneten Assetliste (8).

12. Verfahren nach einem der Ansprüche 1 - 11, ferner umfassend:
Prüfen (S32) der kopierten Containerkomponente auf Schwachstellen in Abhängigkeit von den in der Assetliste (14) gespeicherten Komponenten-Eigenschaften.

13. Verfahren nach einem der Ansprüche 1 - 12, ferner umfassend:
Prüfen, ob die dem zweiten Softwarecontainerbild (9) zugeordnete Assetliste (8) einen Paketmanager für die kopierte Containerkomponente aufweist, und
in Abhängigkeit von dem Prüfungsergebnis.
Abbrechen des Build-Prozesses oder
Überschreiben der die kopierte Containerkomponente betreffenden Informationen der Paketdatenbank in die dem zweiten Softwarecontainerbild (9) zugeordneten Assetliste (8).

14. Verfahren nach einem der Ansprüche 1 - 13, **dadurch gekennzeichnet,**
**dass** die Schritte Bereitstellen (S1), Kopieren (S2), Erfassen (S3) und Speichern (S4) zum Erzeugen eines dritten Softwarecontainerbildes durchgeführt werden, wobei in den Schritten das zweite Softwarecontainerbild als erstes Softwarecontainerbild betrachtet wird und das dritte Softwarecontainerbild als das zweite Softwarecontainerbild.

15. Computerprogrammprodukt, umfassend Befehle, die bei der Ausführung des Programms durch einen oder mehrere Computer diese/n veranlassen, das Verfahren nach einem der Ansprüche 1 - 14 auszuführen.
